(19) Europäisches Patentamt / European Patent Office / Office européen des brevets

(11) **EP 3 074 147 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(51) Int Cl.:
**B21B 31/07** *(2006.01)*     **F16C 33/10** *(2006.01)*
**F16C 33/74** *(2006.01)*

(21) Anmeldenummer: **14796500.8**

(22) Anmeldetag: **11.11.2014**

(86) Internationale Anmeldenummer:
**PCT/EP2014/074256**

(87) Internationale Veröffentlichungsnummer:
**WO 2015/078688 (04.06.2015 Gazette 2015/22)**

(54) **WALZENANORDNUNG FÜR WALZEN IN EINER WALZANLAGE**

ROLL ASSEMBLY FOR ROLLS IN A ROLLING INSTALLATION

ARRANGEMENT DE CYLINDRES POUR DES CYLINDRES DANS UN LAMINOIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2013 DE 102013224117**

(43) Veröffentlichungstag der Anmeldung:
**05.10.2016 Patentblatt 2016/40**

(73) Patentinhaber: **SMS group GmbH**
**40237 Düsseldorf (DE)**

(72) Erfinder:
• **ALKEN, Johannes**
**57076 Siegen (DE)**
• **SEIDEL, Ralf**
**35690 Dillenburg (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**US-A- 4 944 609     US-A1- 2011 278 801**

## Beschreibung

Die Erfindung betrifft eine Walzenanordnung für Walzen in einer Walzanlage gemäß dem Oberbegriff des Anspruchs 1, aufweisend eine Walze mit einem Walzenballen und zumindest einem Walzenzapfen und ein Einbaustück mit einer Aufnahmeöffnung zur Aufnahme des Walzenzapfens. Dabei ist der Innendurchmesser der Aufnahmeöffnung für den Walzenzapfen gegenüber dem Außendurchmesser des Walzenzapfens derart größer ausgebildet, dass sich zwischen dem Einbaustück und dem Walzenzapfen ein Ringspalt zur Aufnahme eines Schmiermittels bildet. Ein erstes Drosselelement ist an der walzenballenseitigen Stirnseite der Aufnahmeöffnung des Einbaustücks und ein zweites Drosselelement an der walzenballenfernen Stirnseite der Aufnahmeöffnung des Einbaustücks jeweils zum Abdichten des Ringspalts angeordnet, wobei die Drosselelemente verdrehsicher gelagert sind. Ein gattungsgemässes Verfahren ist aus US 2011/0299801 A1 bekannt.

## Stand der Technik

Bei Ölfilmlagern, wie sie in Walzgerüsten zur Lagerung von Stützwalzen üblicherweise eingesetzt werden, rotiert ein Walzenzapfen in einer stehenden Lagerbuchse, wobei die Lagerbuchse in einem Einbaustück angeordnet ist. Die Durchmesserdifferenz zwischen dem Walzenzapfen und der Lagerbuchse liegt üblicherweise im Bereich von 1 ‰ des Lagerdurchmessers, d. h. ca. 1 mm Spiel bei 1 m Lagerdurchmesser.

Wird eine äußere Kraft, z. B. die Walzkraft auf die Lagerung aufgebracht, so verschiebt sich zunächst der rotierende Walzenzapfen außermittig zur Lagerbuchse in radialer Richtung entgegen der äußeren Kraftrichtung. Der sich dadurch bildende Ringspalt zwischen dem Walzenzapfen und der Lagerbuchse besitzt dann auf der einen Seite einen minimalen Querschnitt und genau entgegengesetzt einen maximalen Querschnitt. Das Öl, welches über hydrodynamische Taschen dem Lagerspalt zugeführt wird, wird durch die Haftbedingung an der rotierenden Oberfläche des Walzenzapfens in den Bereich des engsten Querschnitts transportiert. Da der Querschnitt des Spaltes bis zur engsten Stelle immer kleiner wird, wird das Öl zur Seite des Lagers herausgepresst. Gleichzeitig steigt dabei aber auch der Druck im Ölfilm, wodurch das Lager in der Lage ist, eine äußere größere Kraft zu tragen. Das Öl, welches zu den beiden Lagerseiten herausgedrückt wird, bezeichnet man üblicherweise als Seitenfluss des Lagers.

Die Druckschriften EP 1 031 389 B1, EP 1 699 575 B1 und DE 198 31 301 A1 beschreiben Dichtungsvorrichtungen für Walzen in Walzwerken.

Die Druckschrift DE 3117 746 A1 beschreibt ein hydrodynamisches Radiallager.

In der technischen Dokumentation "OIL-FILM BEARINGS FOR ROLLING-MILLS", Copyright 1967, American Society of Lubrication Engineers (prepared by the Steel Industrie Council of the American Society of Lubrication Engineers) werden hydrostatische Ölfilmlagerungen für Walzen in einem Walzwerk beschrieben.

Der Ölfilm zwischen dem Walzenzapfen und der den Walzenzapfen aufnehmenden Lagerfläche wird im Folgenden auch als Schmierfilm bezeichnet. Nachteilig bei Systemen ohne Seitenflussreduzierung ist der hohe Seitenfluss des Schmiermittels, selbst wenn dieses nicht zur Kühlung erforderlich ist. Es bedarf eines großen Versorgungsaufwandes und einer großen Peripherie, um genügend Schmiermittel bereitzustellen. Bei geringen Drehzahlen ist eine zusätzliche hydrostatische Unterstützung notwendig, um größere Walzkräfte aufzunehmen; ansonsten ist die Tragfähigkeit des Lagers eher vergleichsweise gering. Die spezifische Baugröße ist zudem je nach geforderter Walzkraft hoch.

Nachteilig bei Systemen mit einem komplett geschlossenen, abgedichteten Seitenfluss des Schmiermittelfilms ist u.a., dass zwischen dem Walzenzapfen und der entsprechenden Lagerfläche der Lagerung für den Walzenzapfen die Betriebstemperatur vor allem bei höheren Drehzahlen ansteigt und daher aufwendige Kühlsysteme erforderlich sind, um den Temperaturanstieg zu begrenzen bzw. gleichmäßig zu halten. Durch den Temperaturanstieg sinkt die Viskosität des Schmiermittels. Folglich sinkt auch der Schmiermitteldruck und es reduziert sich die Tragkraft der Lagerung. Meist werden bei den geschlossenen Systemen Rückschlagventile integriert, um ein Leerlaufen des Kühlkreislaufes zu verhindern. Die Dichtelemente sind kompliziert mit Federvorspannung auf die Walze gezogen. Es sind hohe Maßgenauigkeiten, d. h. kleine Toleranzen vor allem auch in Bezug auf den Rundlauf der Dichtung erforderlich. Das erschwert die Montage, und daher sind je nach Lagertyp und Lagergröße die Dichtelemente geteilt. Nachteilig ist auch, dass das Einbaustück bzw. die Lagerbuchse montagebedingt geteilt ausgeführt sein müssen.

## Aufgabe der Erfindung

Die Aufgabe der Erfindung besteht darin, die Tragkraft bzw. die Walzkraft einer Walzenanordnung für Walzen in einer Walzanlage unter Beibehaltung bzw. Reduzierung der Baugröße zu erhöhen. Die Erfindung soll zudem montagefreundlich und in bestehenden Anlagen nachrüstbar sein.

Diese Aufgabe wird durch den Gegenstand des Anspruchs 1 gelöst. Kennzeichnend für die erfindungsgemäße Walzenanordnung ist, dass das erste und das zweite Drosselelement jeweils einen Absperrwinkelbereich für das Schmiermittel in dem Ringspalt ausbilden und derart positioniert sind, dass sich der Absperrwinkelbereich ausgehend von einem Stützlastpunkt A -der Winkelposition des engsten Spaltes $h_{min}$ im Lastfall zwischen Walzenzapfen und Einbaustück- entgegen der Drehrichtung der Walze über einen Winkel $\alpha$ von mindestens 25° bis maximal 270° erstreckt.

Die erfindungsgemäße Walzenanordnung führt, bedingt durch die Absperrung des Seitenflusses des Schmiermittels, zu einer Druckerhöhung des Schmiermittels im Bereich des Stützlastpunktes und somit zu einer Tragkraftsteigerung bzw. Walzkraftsteigerung der Walzenanordnung. Gleichzeitig wird die Dicke des Schmierfilms im Bereich des Stützlastpunktes erhöht und damit die Betriebssicherheit z.B. hinsichtlich Kantenläufer und in Bezug auf das Anlaufverhalten verbessert. Insbesondere in den vorderen Walzgerüsten einer Walzanlage, in denen aufgrund der relativ geringen Drehzahl nur wenig Wärme im Lager entsteht und daher auch nur wenig Kühlung notwendig ist, kann der Druckaufbau besonders begünstigt werden.

Die Erfindung ermöglicht vorteilhafterweise ein einfaches Nachrüsten in vorhandene Anlagen. Ohne den Bauraum zu vergrößern kann z.B. im Zuge von Modernisierungsmaßnahmen an bestehenden Walzanlagen die Walzkraft und damit die Leistungsfähigkeit der bestehenden Walzanlage um bis zu 40 % erhöht werden. Bestehende Anlagen können an gestiegene Walzkraftforderungen, z. B. durch die Verarbeitung anderer Materialgüten oder Materialdicken, leicht und kostengünstig umgerüstet werden. Die Länge der vorhandenen Lagerbuchse bzw. des Einbaustücks muss dabei nicht verändert werden, da das Drosselelement in einen sowieso vorhandenen Spalt zwischen der Lagerbuchse bzw. dem Einbaustück und dem Walzenballen einmontiert bzw. eingesetzt werden kann.

Wenn keine erhöhte Walzkraft gefordert wird, so kann die Walzenanordnung bei Neuanlagen im Vorfeld insgesamt kleiner dimensioniert werden, um dieselbe Tragkraft wie bisher zu gewährleisten. Das spart vor allem Bauraum, Materialkosten und Fertigungszeit.

Abhängig von der Dimensionierung des Absperrbereichs für den Schmiermittelfluss ist durch entsprechende Rechenmodelle, basierend auf Langzeiterfahrungen und Versuchen, bereits im Vorfeld genau die Tragkraft der Lagerung bestimmbar und durch zumindest ein Drosselelement flexibel veränderbar bzw. einstellbar, ohne bauliche Veränderungen an dem Einbaustück und/oder der Walze vorzunehmen. Mit zunehmender Größe des Winkels für den Absperrbereich wird der Durchfluss des Schmiermittels aus dem Ringspalt unterbrochen. Die Verminderung bzw. Drosselung des Seitenflusses des Schmiermittels innerhalb der Lagerung führt vorteilhafterweise zu einer Steigerung der Tragfähigkeit der Walzenanordnung.

Diese Steigerung der Tragfähigkeit wird vorteilhafterweise erreicht, ohne dass eine Überhitzung der Lagerung zu befürchten wäre. Dies gilt deshalb, weil in einem zu dem Absperrwinkelbereich komplementären Durchflusswinkelbereich von 360° minus Absperrwinkelbereich die erfindungsgemäßen Drosselelemente einen ausreichenden seitlichen Abfluss des Schmiermittels gestatten, der einen ausreichenden Abtransport von Wärme aus dem Lager gewährleistet.

Gemäß einem ersten Ausführungsbeispiel ist vorgesehen, dass der Stützlastpunkt A im Lastfall in einem Winkelbereich von $\varphi = +/-25°$, bezogen auf die senkrecht zur Ebene des Walzgutes stehende Mittenachse Y der Walze angeordnet ist.

Weiterhin ist bevorzugt vorgesehen, dass die Drosselelemente in radialer Richtung formschlüssig und dichtend mit einer Anlagefläche an dem Walzenzapfen anliegend angeordnet sind. Vorteilhafterweise wird dadurch der Schmiermittelfluss aus dem Ringspalt unterbrochen und eine Drucksteigerung des Schmiermittels im Absperrwinkelbereich erzielt.

Vorzugsweise sieht die Erfindung weiterhin vor, dass das erste oder das zweite Drosselelement oder beide Drosselelemente als Ringsegment ausgebildet ist/sind. Vorteilhafterweise können hierdurch gleiche oder unterschiedliche Durchflussbereiche bzw. Absperrbereiche für das Schmiermittel in dem Ringspalt ausgebildet und je nach Lastfall ein vorbestimmter Wert für die theoretisch ermittelte Tragkraft des Lagers eingestellt werden. Die Montage der erfindungsgemäßen ringsegmentförmigen Drosselelemente ist insgesamt vereinfacht gegenüber dem Stand der Technik, wodurch Montagezeiten und Kosten eingespart werden.

Gemäß einem weiteren Ausführungsbeispiel ist vorgesehen, dass an der äußeren Peripherie des Ringsegmentes eine Druckfeder angeordnet ist zum dichtenden Andrücken des Ringsegmentes in radialer Richtung gegen den Walzenzapfen.

Weiterhin ist bevorzugt vorgesehen, dass das erste oder das zweite oder beide Drosselelemente als Drosselring mit dem Absperrwinkelbereich und einem Durchflusswinkelbereich für das Schmiermittel in dem Ringspalt ausgebildet ist/sind, wobei der Durchflusswinkelbereich durch Durchflussöffnungen in dem Drosselring ausgebildet ist, und wobei sich der Durchflusswinkelbereich angrenzend an den Absperrwinkelbereich über einen Winkelbereich von 360° minus Absperrwinkelbereich erstreckt.

Gemäß einem weiteren Ausführungsbeispiel ist bevorzugt vorgesehen, dass der Drosselring als Sprengring mit einem Spalt ausgebildet ist, wobei der Spalt in dem Durchflusswinkelbereich ausgebildet ist.

Vorzugsweise sieht die Erfindung weiterhin vor, dass in dem Einbaustück eine Lagerbuchse zur Aufnahme des Walzenzapfens drehfest angeordnet ist. Im Verschleißfall ist die Lagerbuchse leicht gegen eine neue austauschbar.

Vorzugsweise ist weiterhin vorgesehen, dass die Drosselelemente an das Einbaustück oder an die Lagerbuchse angebracht sind. Nach der Demontage der Walze sind die Drosselelement vorteilhafterweise frei zugänglich und können ohne großen Montageaufwand leicht ersetzt werden. Auch in vorhandene Anlagen können die Drosselelemente mittels beispielsweise einer Schraubverbindung oder Steckverbindung an das Einbaustück oder die Lagerbuchse angebracht und nachgerüstet werden.

Nach einem weiteren bevorzugten Ausführungsbeispiel ist vorgesehen, dass eine Ringnut an zumindest einer der Stirnseiten der Lagerbuchse oder des Einbaustücks ausgebildet ist, und dass zumindest eines der Drosselelemente an seiner dem Einbaustück zugewandten Rückseite einen Flansch aufweist zum Eingreifen in die Ringnut. Damit kann vorteilhafterweise eine einfache Montage über eine Schraub-, Klemm- bzw. Steckverbindung bereitgestellt werden, die zudem eine optimale Lagerung und Fixierung für das Drosselelement gewährleistet. Ein Austausch des Drosselelementes wird hierdurch vereinfacht. Spezialwerkzeuge zum Anbringen bzw. Entfernen sind nicht notwendig. Gegenüber den im Stand der Technik bekannten Abdichtungen sind die Montagezeiten und -kosten für die erfindungsgemäßen Drosselelemente reduziert.

Vorzugsweise sieht die Erfindung vor, dass ein Ölaufnahmeraum zwischen dem Einbaustück und dem Walzenballen und an dem walzenballenfernen Ende des Walzenzapfens ausgebildet ist. Vorteilhafterweise kann das Schmiermittel über den Durchflussbereich des Drosselelementes in den vorhandenen Ölaufnahmeraum abgeleitet werden, wodurch ein Stau des Schmiermittels verhindert wird. Aus dem Ölaufnahmeraum wird das Schmiermittel zur Kühlung in dafür vorgesehene Kühlvorrichtungen abgeleitet.

Vorzugsweise sieht die Erfindung weiterhin vor, dass eine Zapfenbuchse auf dem Walzenzapfen angeordnet ist, und dass die Zapfenbuchse mit dem Walzenzapfen in der Lagerbuchse drehgelagert ist. Bei Verschleiß kann die Zapfenbuchse gegen eine neue oder eine überholte Zapfenbuchse ausgetauscht werden.

Vorzugsweise sieht die Erfindung weiterhin vor, dass das Drosselelement mehrteilig ausgebildet ist. Dadurch werden vorteilhafterweise zum einen der Montageaufwand aufgrund der kleineren Abmessungen der Einzelsegmente reduziert, und aufgrund einer höheren Losgröße die Herstellkosten der Einzelsegmente gesenkt.

Vorzugsweise sieht die Erfindung weiterhin vor, dass der Ringspalt in dem Bereich zwischen dem ersten und dem zweiten Drosselring mit zumindest einem umlaufenden Ringkanal ausgebildet ist. Durch den Übergang des Ringspaltes in den umlaufenden Ringkanal trifft das Schmiermittel auf ein vergrößertes Volumen. Vorteilhafterweise schafft diese Volumenvergrößerung eine zusätzliche Druckausgleichszone als Puffer für das Schmiermittel in dem Ringspalt. Damit kann eine noch feinere Einstellung der Druckverhältnisse, d.h. ein Druckabbau, innerhalb der Walzenlagerung, insbesondere bei höheren Drehzahlen erzielt werden. Die Grenzoberflächengeschwindigkeit der Zapfenbuchse bzw. des Walzenzapfens während des Walzbetriebes, ab der man vorzugsweise zur Druckentlastung den zumindest einen zusätzlichen Ringkanal anbringen sollte, liegt bei 4 m/s. Der Ringkanal kann je nach Größe und Form dem jeweiligen Stützlastpunkt des Lagers angepasst werden.

Vorzugweise ist weiterhin vorgesehen, dass die Walzen als Arbeitswalzen, Stützwalzen und/oder Zwischenwalzen ausgebildet sind.

Weitere Vorteile und Einzelheiten der Erfindung ergeben sich aus den abhängigen Ansprüchen und aus der nachfolgenden Beschreibung, in der die in den Figuren dargestellten Ausführungsformen der Erfindung näher erläutert werden. Dabei sind neben den oben aufgeführten Kombinationen von Merkmalen auch Merkmale alleine oder in anderen Kombinationen erfindungswesentlich.

Beschreibung der Figuren

Figur 1:     Erfindungsgemäße Walzenanordnung mit beidseitigen Drosselelementen;

Figur 2:     Vergrößerte Teilansicht der erfindungsgemäßen Walzenanordnung;

Figur 3:     Schematische Darstellung der Druckverhältnisse einer Walzenlagerung unter Last;

Figur 4:     Schematische Darstellung des Durchflusswinkelbereichs und des Absperrwinkelbereichs der erfindungsgemäßen Walzenanordnung;

Figur 5:     Ausführungsbeispiel eines Drosselrings;

Figur 6a:    Lagertragkraft gemäß Stand der Technik bei nicht abgedichtetem Seitenfluss des Schmiermittels;

Figur 6b:    Lagertragkraft gemäß der erfindungsgemäßen Walzenanordnung bei partiell abgedichtetem Seitenfluss des Schmiermittels;

Figur 6c:    Lagertragkraft gemäß Stand der Technik bei komplett abgedichtetem Seitenfluss des Schmiermittels;

Figur 7a:    Schmiermittelfluss an der Lagerbuchsen- bzw. Einbaustückinnenseite ohne Seitenflussbegrenzung gemäß dem Stand der Technik;

Figur 7b:    Schmiermittelfluss an der Lagerbuchsen- bzw. Einbaustückinnenseite mit partieller Seitenflussbegrenzung gemäß der erfindungsgemäßen Walzenanordnung;

Figur 8a:    Druckverteilung an der Lagerbuchsen- bzw. Einbaustückinnenseite ohne Seitenflussbegrenzung gemäß dem Stand der Technik;

Figur 8b:    Druckverteilung an der Lagerbuchsen- bzw. Einbaustückinnenseite mit partieller Seitenflussbegrenzung gemäß der erfindungsgemäßen Walzenanordnung.

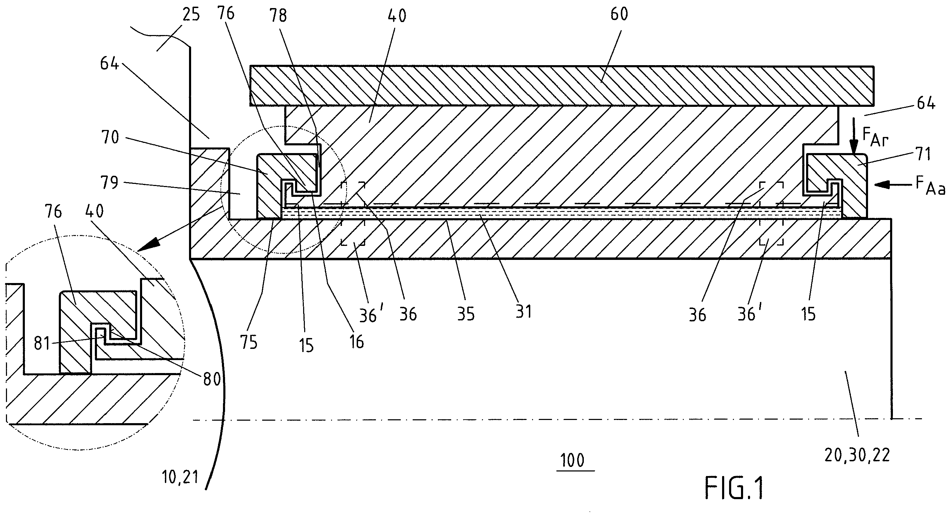

Die Darstellung in der Figur 1 beschreibt eine erfindungsgemäße Walzenanordnung 100 für Walzen 10 in einer Walzanlage. Dabei ist die Walze 10 mit einem Walzenballen 25 und zumindest einem Walzenzapfen 20 ausgebildet. Ein Einbaustück 60 mit einer Aufnahmeöffnung ist zur Aufnahme des Walzenzapfens 20 angeordnet, wobei der Innendurchmesser der Aufnahmeöffnung gegenüber dem Außendurchmesser des Walzenzapfens 20 derart größer ausgebildet ist, so dass sich zwischen dem Einbaustück 60 und dem Walzenzapfen 20 ein Ringspalt 35 bildet. In dem Ringspalt 35 ist ein Schmiermittel 31, z. B. Hydrauliköl, angeordnet. Im Bereich des walzenballenseitigen Endes 21 des Einbaustücks 60 ist ein erstes Drosselelement 70, und im Bereich des walzenballenfernen Endes 22 des Einbaustücks 60 ist in zweites Drosselelement 71 jeweils zum Abdichten des Ringspalts 35 angeordnet, wobei die Drosselelemente 70, 71 verdrehsicher gegenüber dem Walzenzapfen 20 angeordnet sind. Die Verdrehsicherung erfolgt beispielsweise durch übliche Befestigungselemente, wie Schrauben, Nieten, Bolzen, Stifte usw. Möglich ist aber auch ein Anschlag an der Lagerbuchse 40 oder an dem Einbaustück 60, gegen den sich das Drosselelement anlegt oder eine Ausfräsung an der Lagerbuchse 40 oder dem Einbaustück 60, in die das Drosselelement passgenau eingelegt wird, um eine Verdrehung des Drosselelements in Umfangsrichtung zu unterbinden. Das erste und das zweite Drosselelement 70, 71 bilden jeweils einen Absperrwinkelbereich 52, $\alpha$ für das Schmiermittel 31 in dem Ringspalt 35.

Das Drosselelement 70, 71 ist vorzugsweise aus einem handelsüblichen Elastomere oder aus einer Kombination Elastomere/Stahl gefertigt.

Gemäß einem ersten Ausführungsbeispiel ist das erste oder das zweite Drosselelement oder sind beide Drosselelemente 70, 71 bevorzugt als Ringsegment ausgebildet. Als Ringsegmente erstrecken sie sich lediglich über eine Kreisbogenlänge, welche der Kreisbogenlänge des Absperrwinkelbereiches entspricht. Die Ringsegmente sind derart an der Lagerbuchse oder an dem Einbaustück angeordnet, dass sie sich über den Absperrwinkelbereich erstrecken und diesen abdichten. Um ein formschlüssiges und dichtendes Anliegen der Ringsegmente an der Oberfläche des Walzenzapfens zu gewährleisten, kann an der äußeren Peripherie der Ringsegmente eine Druckfeder angeordnet sein, welche das Ringsegment in radialer Richtung an den Walzenzapfen andrückt.

Gemäß einem zweiten Ausführungsbeispiel sind das erste oder das zweite Drosselelement oder sind beide Drosselelemente 70, 71 als Drosselring mit einem Absperrwinkelbereich 52, $\alpha$ und einem Durchflusswinkelbereich 74, $\beta$ für das Schmiermittel 31 in dem Ringspalt ausgebildet. Dabei ist der Durchflusswinkelbereich 74, $\beta$ beispielsweise durch Öffnungen 72 in dem Dros

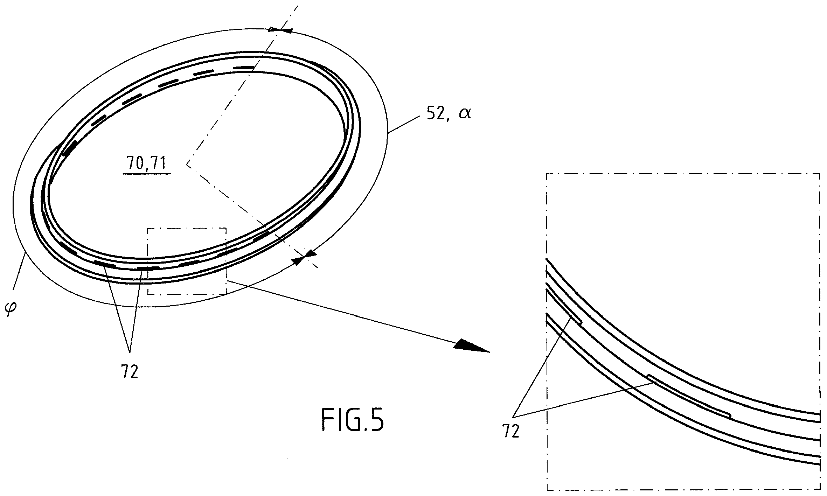

selring ausgebildet. Der Durchflusswinkelbereich erstreckt sich angrenzend an den Absperrwinkelbereich über einen Winkelbereich von 360° minus Absperrwinkelbereich, so wie in der Figur 5 näher dargestellt.

Vorzugsweise ist der Drosselring 70, 71 in Form eines Sprengringes mit einem eingelagerten bzw. einextrudiertem Federelement ausgebildet, so dass der Drosselring 70, 71 mit der Feder-Vorspannkraft in Form einer radialen Andrückkraft FAr mit der Anlagefläche 75 formschlüssig und dichtend gegen den Walzenzapfen 20 angestellt bzw. angedrückt wird.

Figur 1 zeigt eine Möglichkeit, wie die Drosselelemente 70, 71, egal ob als Ringsegment oder als Drosselring ausgebildet, an die Lagerbuchse 40 oder an das Einbaustück angekoppelt sein können. Dazu ist an der Lagerbuchse oder an dem Einbaustück eine Ringnut mit einem sich radial erstreckenden Anschlag 15 angeordnet zur Anbindung bzw. zur Aufnahme des Drosselelements 70, 71. Anwendungsbedingt kann vorgesehen sein, die Lagerbuchse 40 einstückig mit dem Einbaustück 60 auszubilden. Zur Realisierung der Ankopplung weisen die Drosselelemente, egal ob als Drosselring oder als Ringsegment ausgebildet, jeweils an ihrer dem Einbaustück zugewandten Rückseite einen Flansch auf, der in die Ringnut eingreift bzw. eingeklinkt wird. Bei dem Ringsegment gewährleistet die Druckfeder an der äußeren Peripherie und bei dem Drosselring gewährleistet dessen Ausbildung als Sprengring mit der Feder-Vorspannkraft $F_{Ar}$ das Halten des jeweiligen Flansches und damit des Drosselelementes in der Ringnut.

In axialer Richtung können die Drosselelemente durch bekannte Befestigungselemente, wie Nieten, Schrauben, Klammern etc. mit einer axialen Andrückkraft $F_{Aa}$ an das Einbaustück oder die Lagerbuchse angedrückt werden.

Zum Ausgleich von Längenveränderungen durch Temperaturschwankungen und Lagerbewegungen während des Betriebes ist die Breite der Ringnut 16 in axialer Richtung des Walzenzapfens 20 größer als die Breite eines in der Ringnut 16 gelagerten Flansches 76 des Drosselelementes 70, 71 ausgebildet, wodurch sich ein erster Spalt 78 zwischen einer Stirnseite des Einbaustücks 60 bzw. der Lagerbuchse 40 und des Flansches 76 ausbildet. Zudem ist zwischen dem Einbaustück 60 bzw. der Lagerbuchse 40 und der Stirnseite des Walzenballens 25 ein zweiter Spalt 79 angeordnet, in den zumindest ein Teilbereich des Profilquerschnitts des Drosselelementes 70, 71 mit Spiel gelagert ist. Der Flansch 76 ist derart in der Ringnut 16 gelagert, dass eine erste Dichtfläche 80 an dem Flansch 76 gegen eine dieser gegenüberliegende zweite Dichtfläche 81 des Anschlages 15 mit einer axialen Andrückkraft $F_{Aa}$ angepresst wird, um den Schmiermittelfluß aus dem Ringspalt 35 abzudichten. Die notwendige axiale Andrückkraft $F_{Aa}$ wird beispielsweise über eine Feder, einen Klemmring oder eine Schraubverbindung aufgebracht. Ebenso kann vorgesehen sein, dass das Drosselelement 70, 71 mittels einer mechanischen Ankopplung, z. B. in Form von Schrauben, Nieten oder Bolzen dichtend an das Einbaustück oder die Lagerbuchse angekoppelt ist (nicht in den Figuren gezeigt).

Zwischen dem Einbaustück 60 und dem Walzenballen 25 ist ein Ölaufnahmeraum 64 zur Aufnahme des Schmiermittels 31 angeordnet, wobei das Schmiermittel 31 bei einer Drehbewegung der Walze 10 aus dem Ringspalt 35 verdrängt wird und durch den Durchflusswinkelbereich in diesen Aufnahmeraum 64 abfließt. So ist vorzugsweise auch an dem walzenballenfernen Ende 22 des Walzenzapfens 20 ein Aufnahmeraum 64 für das Schmiermittel 31 vorgesehen.

In der Figur 1 nicht dargestellt ist die Ausbildung des Drosselelementes 70, 71 in einer mehrteiligen Ausführung. Dabei sind die einzelnen Teile ringsegmentförmig ausgeführt, wobei vorteilhafterweise die Segmentteile formgleich sind.

Gegenüber dem ersten und/oder dem zweiten Drosselelement 70, 71 in Richtung der Mitte bzw. der halben Breite des Einbaustücks ist nach innen hin versetzt vorzugsweise vorgesehen, dass der Ringspalt 35 mit zumindest einem umlaufenden Ringkanal 36, 36' ausgebildet ist. Dieser Ringkanal 36, 36' kann, wie in Figur 1 gezeigt, in der Lagerbuchse 40 angeordnet sein. Konstruktiv kann jedoch auch vorgesehen sein, den zusätzlichen Ringkanal 36, 36' am Walzenzapfen 20 und/oder an der Lagerbuchse 40 bzw. dem Einbaustück 60 anzuordnen. Der Ringkanal 36, 36' kann mit unterschiedlichen Querschnittsformen z. B. quadratisch, vorteilhafterweise rechteckig, halb-oval, dreieckig ausgebildet sein, um verschieden große Aufnahmeräume bereitzustellen.

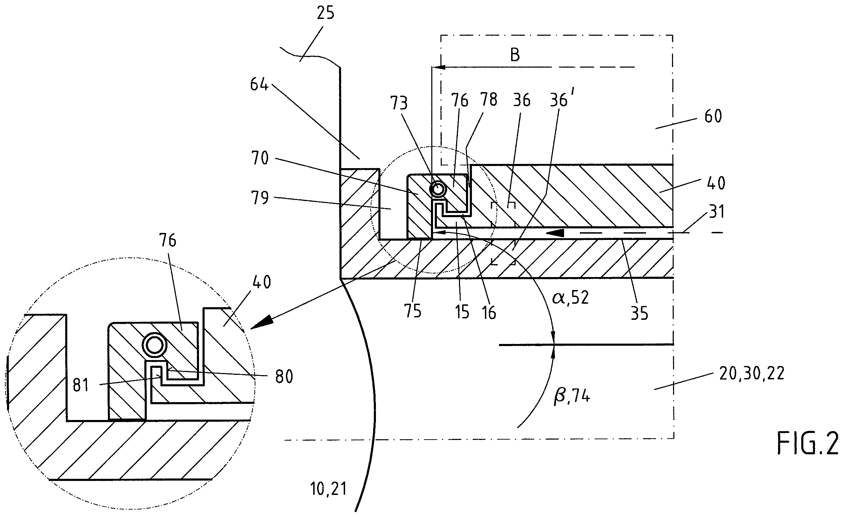

Die in der Figur 2 dargestellte Teilansicht der Figur 1 zeigt im Wesentlichen die Bauteile der Walzenanordnung 100 an dem walzenballenseitigen Ende 21 des Walzenzapfens 20. Die Erklärungen zu den in der Figur 2 dargestellten Bezugszeichen entsprechen denjenigen, wie zuvor in der Beschreibung zu der Figur 1 aufgeführt. Das Maß B beschreibt die Gesamtbreite des Einbaustücks 60 mit eingebauter Lagerbuchse 40.

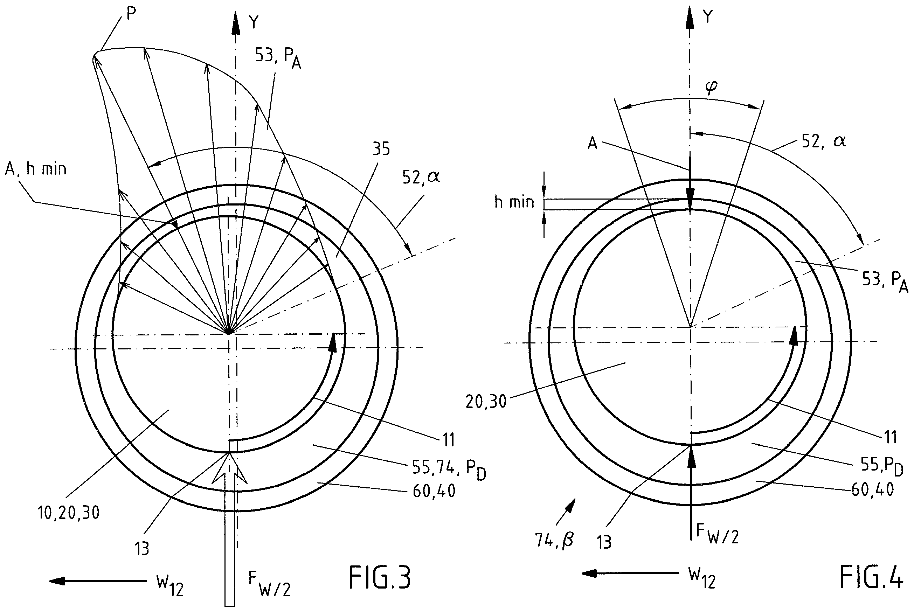

In der Figur 2 ist schematisch der Absperrwinkelbereich 52, $\alpha$ und der Durchflusswinkelbereich 74, $\beta$ für das Schmiermittel 31 in dem Ringspalt 35 dargestellt. Ergänzend zeigt die Figur 4 eine Vorderansicht, aus der die Aufteilung des Absperrwinkelbereichs 52, $\alpha$ und des Durchflusswinkelbereichs 74, $\beta$, bezogen auf den Umfang des Walzenzapfens 20, dargestellt ist.

Der Fluss des Schmiermittels 31 wird an dem walzenballenseitigen Ende 21 des Walzenzapfens 20 bzw. des Einbaustücks im Absperrbereich durch das Drosselelement 70 abgesperrt. In dem zweiten Spalt 79, zwischen dem Drosselelement 70, 71 und dem Walzenballen 25 oder einem Anschlag des walzenballenseitigen Endes der Zapfenbuchse 30 ist Spiel vorgesehen, zum Ausgleich von axialen Veränderungen bzw. Verschiebungen der Walzenanordnung während des Betriebes. Der zweite Spalt 79 ist grundsätzlich auch bei vorhandenen Anlagen gemäß dem Stand der Technik angeordnet.

Der erfindungsgemäße Drosselring 70, 71 ist vorteilhafterweise so ausgelegt, dass er in das vorhandene Spiel in dem zweiten Spalt 79 eingesetzt werden kann, ohne dass dafür die Gesamtbreite B des Einbaustücks 60 reduziert werden müsste.

Die Darstellung in Figur 3 zeigt schematisch die erfindungsgemäße Walzenanordnung 100 als Ölfilmlagerung für z. B. Stützwalzen im Betriebszustand. Die zwischen Walzgut 12 und Stützwalze 10 angeordnete Arbeitswalze ist nicht dargestellt. Die Drehrichtung der Stützwalze 10 ergibt sich aus der Walzrichtung W des Walzgutes 12, unter Berücksichtigung der Drehrichtungsumkehr durch die nicht dargestellte Arbeitswalze.

Beim Durchleiten des Walzgutes 12 in der gezeigten Walzrichtung W dreht sich beispielsweise die obere Stützwalze 10 entgegen dem Uhrzeigersinn und drückt mit einer Walzkraft FW an einem Lastangriffspunkt 13 auf die nicht dargestellte Arbeitswalze. Die nicht dargestellte untere Stützwalze dreht im Uhrzeigersinn und drückt entsprechend von unten an dem Lasteingriffspunkt 13 mit der Walzkraft - FW über die nicht dargestellte Arbeitswalze auf das Walzgut 12. Wie in Figur 3 dargestellt wird die Walzkraft $F_W$ über die Walzenzapfen 20 in die Walzenzapfenlagerung innerhalb des Einbaustücks 60 eingeleitet. Ist die Walze 10 an den beiden Enden über einen Walzenzapfen 10 gelagert, so ist die wirksame Kraft an dem Walzenzapfen innerhalb der jeweiligen Walzenzapfenlagerung beziehungsweise innerhalb des jeweiligen Einbaustücks ½ $F_W$.

Zwischen dem Walzenzapfen 20, bzw. der auf dem Walzenzapfen 20 angeordneten Zapfenbuchse 30 und dem Einbaustück 60, bzw. der in dem Einbaustück angeordneten Lagerbuchse 40 ist der Ringspalt 35 ausgebildet. Der Absperrwinkelbereich 52, $\alpha$ erstreckt sich entgegen der Drehrichtung 11 der Walze 10, ausgehend von dem Stützlastpunkt A - der Winkelposition des engsten Spaltes $h_{min}$ im Lastfall zwischen Walzenzapfen 20 und Einbaustück 60. Durch die Walzkraft $F_W$ erfährt die Walze 10 und damit auch der Walzenzapfen 20 eine radiale außermittige bzw asymmetrische Verschiebung in dem Ringspalt 35. Der Stützlastpunkt A ist im Lastfall in einem Winkelbereich von $\varphi$ = +/- 25° (siehe Figur 4), bezogen auf die senkrecht zur Ebene des Walzgutes stehende Mittenachse Y der Walze 10 angeordnet.

Der Absperrwinkelbereich 52, $\alpha$ erstreckt sich, ausgehend von dem Stützlastpunkt A - der Winkelposition des engsten Spaltes $h_{min}$ im Lastfall zwischen Walzenzapfen 20 und Einbaustück 60- entgegen der Drehrichtung 11 der Walze 10 über einen Winkel $\alpha$ von mindestens 25° bis maximal 270°. Durch die Absperrung des Schmiermittelflusses 37 mit dem Drosselelement 70, 71 entsteht ein druckaufbauender Bereich 53 mit einem Druck $P_A$. Der durch das Drosselelement 70, 71 nicht abgesperrte Durchflusswinkelbereich bildet einen Niederdruckbereich 55 mit einem Druck $P_D$. Durch die Auswahl unterschiedlich großer Drosselelemente 70, 71, d.h. durch die Vorbestimmung des Segmentwinkels $\alpha$ des jeweiligen Drosselelementes 70, 71, wird der Ab-

sperrwinkelbereich 52, $\alpha$ und der Durchflusswinkelbereich 74, $\beta$ verändert, wodurch die effektive Größe der Tragkraftsteigerung flexibel einstellbar ist.

Die erfindungsgemäße Walzenanordnung ist prinzipiell zur Lagerung von Stützwalzen und/oder Zwischenwalzen anwendbar.

Die schematische Darstellung in der Figur 4 entspricht grundsätzlich der Darstellung der Figur 3. Ergänzend ist in der Figur 4 der Winkelbereich $\varphi$ = +/- 25° für den Stützlastpunkt A -bezogen auf die senkrecht zur Ebene des Walzgutes stehenden Mittenachse Y der Walze 10- gezeigt. An dem Stützlastpunkt A stellt sich im Lastfall zwischen Walzenzapfen 20 und Einbaustück 60 der engste Spalt $h_{min}$ ein. Die tatsächliche Position des Stützlastpunktes A ist u. a. abhängig von der Dicke, der Festigkeit und der Walzgeschwindigkeit des Walzgutes W. Der Stützlastpunkt A justiert sich im Lastfall automatisch aus.

Figur 5 beschreibt eine mögliche Ausführungsform des Drosselelementes 70, 71 als Drosselring mit Durchflussöffnungen 72. Der Durchflusswinkelbereich 74, $\beta$ wird in dieser Ausführungsform durch die Durchflussöffnungen 72 in dem Drosselring ausgebildet. Der Absperrwinkelbereich 52, $\alpha$ ist ohne Durchflussöffnungen ausgebildet. Der Drosselring ist an dem Einbaustück oder an der Lagerbuchse in einer solchen Drehwinkelposition befestigt, dass sich der Absperrbereich, ausgehend von der vorberechneten Position des Stützlastpunktes, entgegen der Drehrichtung der Walze erstreckt. In der möglichen Ausführungsform als Sprengring ist aus Gründen einer vereinfachten Montage vorgesehen, dass der Drosselring an einer Trennstelle T getrennt ist und dass sich dort ein geringfügiger Spalt ausbildet, wobei der Spalt innerhalb des Durchflussbereiches angeordnet ist.

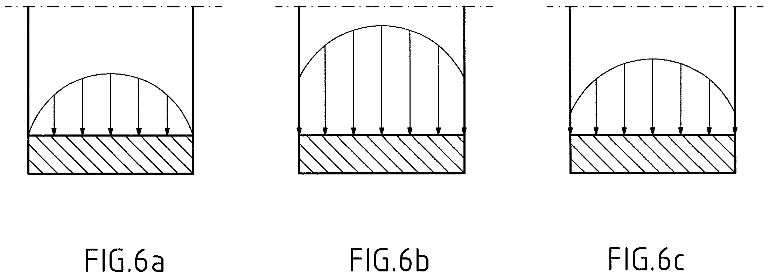

Die Figuren 6a bis 6c zeigen schematisch eine Gegenüberstellung der Druckverhältnisse verschiedener Ölfilmlagerungen. Die Figur 6a zeigt dabei eine Ölfilmlagerung gemäß dem Stand der Technik, bei der der Seitenfluss des Schmiermittels nicht abgedichtet ist. Die mittlere Darstellung in der Figur 6b beschreibt die partielle seitliche Abdichtung des Ölfilmlagers durch die erfindungsgemäßen Drosselelemente 70, 71. Die Darstellung in der Figur 6c beschreibt eine Ölfilmlagerung gemäß dem Stand der Technik, bei der der Seitenfluss komplett abgedichtet ist. Aus den Figuren ist ersichtlich, dass die erfindungsgemäße partielle Abdichtung die größte Tragfähigkeit der Ölfilmlagerung ergibt.

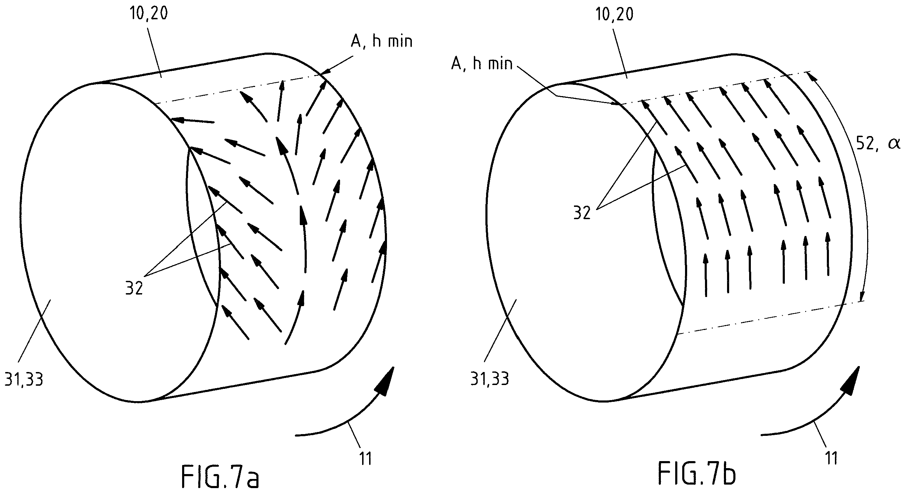

Die Figuren 7a und 7b zeigen schematisch die Stromlinien 32 des Ölfilms bzw. Schmiermittels als Vergleich zwischen einem Lager ohne Seitenflussbegrenzung, wie in der Figur 7a dargestellt, und der erfindungsgemäßen Ölfilmlagerung mit Seitenflussbegrenzung, dargestellt in der Figur 7b. Die Drehrichtung 11 der Walze 10 bzw. des Walzenzapfens 20 ist entgegen dem Uhrzeigersinn. Das Schmiermittel 31 wird über eine Ölzuführung 33 in den Ringspalt 35 (nicht dargestellt) eingebracht. Mit der Drehbewegung des Walzenzapfens wird das Schmiermittel entsprechend der durch die Pfeile dargestellten Richtungen innerhalb der Ölfilmlagerung verteilt. Dabei wird der Schmiermittelfluss bei der erfindungsgemäßen Walzenanordnung gemäß Figur 7b in dem Absperrwinkelbereich 52, $\alpha$ derart abgesperrt, dass ein seitlicher Fluss des Schmiermittels 31 bereichsweise unterbunden ist. Am Stützlastpunkt A bildet sich der engste Spalt $h_{min}$ aus, wodurch folglich an dieser Stelle die Schmierfilmdicke minimal ist.

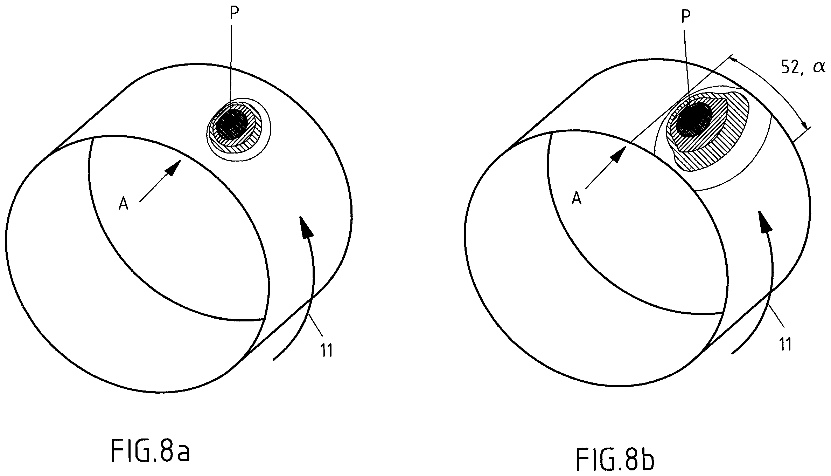

Die Figuren 8a und 8b zeigen schematisch die Druckverteilung an der Lagerbuchseninnenseite als Gegenüberstellung einer Ölfilmlagerung ohne Seitenflussbegrenzung gemäß Figur 8a, wie sie im Stand der Technik bekannt ist, und der erfindungsgemäßen Ölfilmlagerung mit partieller Seitenflussbegrenzung gemäß Figur 8b. Die Beschreibungen zu den Bezugszeichen entsprechen den zuvor beschriebenen.

Funktionsbeschreibung

Wird eine äußere Kraft, z. B. eine Walzkraft $F_W$ über das Einbaustück 60 auf die Lagerung für den Walzenzapfen 20 aufgebracht, so verschiebt sich zunächst die Walze 10 radial gegenüber dem Einbaustück 60, bzw. einer Lagerbuchse 40 in dem Einbaustück 60, wobei die Lagerbuchse 40 auch einstückig mit dem Einbaustück 60 ausgebildet sein kann. Bei der folgenden Betrachtung wird von der beispielhaften Ausführung der Lagerung ausgegangen, bei der in dem Einbaustück 60 eine Lagerbuchse 40 und auf dem Walzenzapfen 20 eine Zapfenbuchse 30 angeordnet sind. Durch das Spiel zwischen der Lagerbuchse 40 und der Zapfenbuchse 30 bildet sich ein Ringspalt 35 zur Aufnahme eines Schmiermittels 31. Im Belastungsfall bildet der Ringspalt 35 an einem Stützlastpunkt A einen minimalen Spalt $h_{min}$ zwischen der Lagerbuchse 40 und der Zapfenbuchse 30. Das Schmiermittel 31, welches über eine Schmiermittelzuführung 33, z. B. über hydrodynamische Taschen dem Ringspalt 35 zugeführt wird, wird durch die Haftbedingungen an der rotierenden Oberfläche der formschlüssig mit dem Walzenzapfen 20 verbundenen Zapfenbuchse 30 in den engsten Spalt $h_{min}$ im Bereich des Stützlastpunktes A transportiert. Da der Querschnitt des Spaltes bis zur engsten Stelle $h_{min}$ immer kleiner wird, will das Schmiermittel 31 zur Seite des Lagers entweichen. Gleichzeitig steigt aber dabei auch der Druck $P_A$ im Schmierfilm 31 an, wodurch die Walzenanordnung 100 in der Lage ist, eine äußere Kraft, z.B. die Walzkraft $F_W$ zu tragen.

Erfindungsgemäß wird der Seitenfluss des Schmiermittels 31 durch den Einsatz von Drosselelementen 70, 71, die an den beiden Seiten der Lagerbuchse 40 angeordnet sind, reduziert. Durch diese Reduzierung des Seitenflusses in einem Absperrwinkelbereich 52, $\alpha$ = 25° bis maximal 270° - ausgehend von dem Stützlastpunkt A entgegen der Drehrichtung 11 der Walze 10 - ergibt sich eine deutliche Druckerhöhung und damit eine Tragkraftsteigerung von bis zu 40 %, ohne dass dadurch eine Temperaturerhöhung des Schmiermittels 31 auftritt, welche die Fluidviskosität und damit die Lagertragkraft negativ beeinflussen würde.

Insbesondere in den vorderen Walzgerüsten einer Walzstraße, in denen aufgrund der relativ geringen Drehzahl nur wenig Wärme in der Lagerung entsteht und daher auch nur wenig Kühlung notwendig ist, kann der Druckaufbau durch die erfindungsgemäße Anordnung besonders begünstigt werden.

Durch die Variation der Größe des Absperrbereiches durch das Drosselelement 70, 71 an dem walzenballenseitigen Ende des Walzenzapfens 21 und/oder an dem walzenballenfernen Ende des Walzenzapfens 22 kann die maximale Tragfähigkeit der Ölfilmlagerung basierend auf theoretischen Berechnungen bereits im Vorfeld eines Walzvorgangs mit einer maximalen Fehlerabweichung von +/- 5 % voreingestellt werden. Als Überschlagsformel für den Fluiddurchsatz in Folge der Eigendruckentwicklung in einem Ölfilmlager ohne Seitenflussbegrenzung kann folgende Formel zugrunde gelegt werden (Quelle: DIN 31652 Teil 1):

$$Q_1 = D^3 \cdot \psi_{eff} \cdot \omega_{eff} \cdot q_1$$

$Q_1$ = Seitenfluss des Fluids
$D$ = Lagerinnendurchmesser
$\Psi_{eff}$ = effektives Lagerspiel
$\omega_{eff}$ = hydrodynamisch effektive Winkelgeschwindigkeit

$$q1 = f\left(\varepsilon, \frac{B}{D}, \Omega\right)$$

$\varepsilon$ = relative Exzentrizität
$B$ = Lagerbreite
$\Omega$ = Umschließungswinkel

Führt man eine Drossel ein, so reduziert sich der ungehinderte Seitenfluss des Schmiermittels 31 von $Q_1$ auf $Q_1^*$, wodurch der Druck des Schmiermittels 31 ansteigt. Es ergibt sich somit das Durchflussverhältnis:

$$\pi = \frac{Q_1^*}{Q_1}$$

$Q_1$ = ungedrosselter Lagerseitenfluss des Fluids
$Q_1^*$ = gedrosselter Lagerseitenfluss des Fluids
$\pi$ = Durchflussverhältnis

Mit $\pi = 1 \rightarrow$ ungedrosselter Lagerseitenfluss des Fluids
Mit $\pi = 0 \rightarrow$ vollständig gedrosselter Lagerseitenfluss des Fluids
Die Erfindung arbeitet im Bereich $0 < \pi < 1$.

Bezugszeichenliste

| | |
|---|---|
| 100 | Walzenanordnung |
| 10 | Walze |
| 11 | Drehrichtung |
| 12 | Walzgut |
| 13 | Lastangriffspunkt |
| 15 | Anschlag |
| 16 | Ringnut |
| 20 | Walzenzapfen |
| 21 | walzenballenseitiges Ende des Walzenzapfens |
| 22 | ballenfernes Ende des Walzenzapfens |
| 25 | Walzenballen |
| 30 | Zapfenbuchse |
| 31 | Schmiermittel |
| 32 | Stromlinien |
| 33 | Schmiermittelzuführung |
| 35 | Ringspalt |
| 36 | Ringkanal |
| 36' | Ringkanal |
| 40 | Lagerbuchse |
| 52 | Absperrwinkelbereich |
| 53 | druckaufbauender Bereich |
| 55 | Niederdruckbereich |
| 60 | Einbaustück |
| 64 | Ölaufnahmeraum |
| 70 | erstes Drosselelement |
| 71 | zweites Drosselelement |
| 72 | Durchflussöffnungen |
| 73 | Spannelement |
| 74 | Durchflussbereich |
| 75 | Anlagefläche |
| 76 | Flansch |
| 78 | erster Spalt |
| 79 | zweiter Spalt |
| 80 | erste Dichtfläche |
| 81 | zweite Dichtfläche |
| | |
| $\alpha$ | Winkel des abgesperrten Bereichs |
| $\beta$ | Winkel des Durchflussbereichs |
| $\varphi$ | Winkelbereich für den Stützlastpunkt |
| $A$ | Stützlastpunkt |
| $B$ | Gesamtbreite des Einbaustückes, ggf. mit Lagerbuchse |
| $F_{Ar}$ | radiale Andrückkraft |
| $F_{Aa}$ | axiale Andrückkraft |
| $F_W$ | Walzkraft |
| $P$ | Druck/ Druckverteilung |
| $P_A$ | Druck im Absperrwinkelbereich |
| $P_D$ | Druck im Durchflusswinkelbereich |
| $T$ | Trennstelle |
| $W_{12}$ | Walzrichtung |
| $Y$ | Mittenachse der Walze |
| $h_{min}$ | engster Spalt |

**Patentansprüche**

1. Walzenanordnung (100) für Walzen in einer Walzanlage, aufweisend:

   eine Walze (10) mit einem Walzenballen (25) und zumindest einem Walzenzapfen (20);
   ein Einbaustück (60) mit einer Aufnahmeöffnung zur Aufnahme des Walzenzapfens (20), wobei der Innendurchmesser der Aufnahmeöffnung gegenüber dem Außendurchmesser des Walzenzapfens (20) derart größer ausgebildet ist, dass zwischen dem Einbaustück (60) und dem Walzenzapfen (20) ein Ringspalt (35) zur Aufnahme eines Schmiermittels (31) angeordnet ist;
   ein erstes Drosselelement (70), welches verdrehsicher an der walzenballenseitigen Stirnseite der Aufnahmeöffnung des Einbaustücks angeordnet ist zum Abdichten des dortigen Ringspaltes; und
   ein zweites Drosselelement (71), welches verdrehsicher an der walzenballenfernen Stirnseite der Aufnahmeöffnung des Einbaustücks angeordnet ist zum Abdichten des dortigen Ringspalts (35);
   **dadurch gekennzeichnet, dass**
   das erste und das zweite Drosselelement (70, 71) jeweils einen Absperrwinkelbereich (52,$\alpha$) für das Schmiermittel (31) in dem Ringspalt (35) ausbilden und derart positioniert sind, dass sich der Absperrwinkelbereich (52,$\alpha$) ausgehend von einem Stützlastpunkt (A) -der Winkelposition des engsten Spaltes $h_{min}$ im Lastfall zwischen Walzenzapfen (20) und Einbaustück (60)- entgegen der Drehrichtung (11) der Walze (10) über einen Winkel ($\alpha$) von mindestens 25° bis maximal 270° erstreckt.

2. Walzenanordnung (100) nach Anspruch 1, **dadurch gekennzeichnet,** **dass** der Stützlastpunkt (A) im Lastfall in einem Winkelbereich von $\varphi$ = +/- 25°, bezogen auf die senkrecht zur Ebene des Walzgutes stehende Mittenachse Y der Walze (10) angeordnet ist.

3. Walzenanordnung nach Anspruch 1 oder 2, **dadurch gekennzeichnet, dass** die Drosselelemente in radialer Richtung formschlüssig und dichtend an dem Walzenzapfen (20) anliegend angeordnet sind.

4. Walzenanordnung (100) nach einem der vorangegangenen Ansprüche **dadurch gekennzeichnet, dass** das erste oder das zweite Drosselelement oder beide Drosselelemente (70, 71) als Ringsegment ausgebildet ist /sind.

5. Walzenanordnung nach Anspruch 4, **dadurch gekennzeichnet,** **dass** an der äußeren Peripherie des Ringsegmentes eine Druckfeder angeordnet ist zum dichtenden Andrücken des Ringsegmentes in radialer Richtung gegen den Walzenzapfen.

6. Walzenanordnung (100) nach einem der vorangegangenen Ansprüche, **dadurch gekennzeichnet,** **dass** das erste oder das zweite oder beide Drosselelemente als Drosselring mit dem Absperrwinkelbereich ($\alpha$, 52) und einem Durchflusswinkelbereich ($\beta$, 74) für das Schmiermittel (31) in dem Ringspalt (35) ausgebildet ist/sind, wobei der Durchflusswinkelbereich ($\beta$, 74) durch Durchflussöffnungen in dem Drosselring ausgebildet ist, und wobei sich der Durchflusswinkelbereich angrenzend an den Absperrwinkelbereich über einen Winkelbereich von 360° minus Absperrwinkelbereich erstreckt.

7. Walzenanordnung nach Anspruch 6, **dadurch gekennzeichnet,** **dass** der Drosselring als Sprengring mit einem Spalt ausgebildet ist, wobei der Spalt in dem Durchflusswinkelbereich ausgebildet ist.

8. Walzenanordnung (100) nach einem der vorangegangenen Ansprüche, **dadurch gekennzeichnet, dass** in dem Einbaustück (60) eine Lagerbuchse (40) zur Aufnahme des Walzenzapfens (20) drehfest angeordnet ist.

9. Walzenanordnung (100) nach einem der vorangegangenen Ansprüche, **dadurch gekennzeichnet, dass** die Drosselelemente (70, 71) an das Einbaustück (60) oder an die Lagerbuchse (40) angekoppelt ist/sind.

10. Walzenanordnung (100) nach einem der vorangegangenen Ansprüche, **dadurch gekennzeichnet, dass** eine Ringnut (16) an zumindest einer der Stirnseiten der Lagerbuchse (40) oder des Einbaustücks (60) ausgebildet ist, und dass zumindest eines der Drosselelemente (70, 71) an seiner dem Einbaustück zugewandten Rückseite einen Flansch (76) aufweist zum Eingreifen in die Ringnut.

11. Walzenanordnung nach einem der vorangegangenen Ansprüche, **dadurch gekennzeichnet,** **dass** ein Ölaufnahmeraum (64) zwischen dem Einbaustück (60) und dem Walzenballen (25) und an dem walzenballenfernen Ende (22) des Walzenzapfens (20) ausgebildet ist.

**12.** Walzenanordnung nach Anspruch 1 oder 8, **dadurch gekennzeichnet,**
**dass** eine Zapfenbuchse (30) auf dem Walzenzapfen (20) angeordnet ist; und
**dass** die Zapfenbuchse mit dem Walzenzapfen in der Aufnahmeöffnung des Einbaustücks oder - sofern vorhanden - in der Lagerbuchse drehgelagert ist.

**13.** Walzenanordnung nach einem der vorangegangenen Ansprüche,
**dadurch gekennzeichnet, dass**
das Drosselelement (70, 71) mehrteilig ausgebildet ist.

**14.** Walzenanordnung nach einem der vorangegangenen Ansprüche,
**dadurch gekennzeichnet, dass**
der Ringspalt (35) in dem Bereich zwischen dem ersten und dem zweiten Drosselring (70, 71) mit zumindest einem umlaufenden Ringkanal (36, 36') ausgebildet ist.

**15.** Walzenanordnung nach Anspruch 1,
**dadurch gekennzeichnet, dass**
die Walzen als Arbeitswalzen, Stützwalzen und/oder Zwischenwalzen ausgebildet sind.

**Claims**

**1.** Roll assembly (100) for rolls in a rolling mill, comprising:

a roll (10) with a roll barrel (25) and at least one roll neck (20);
a chock (60) with a receiving opening for receiving the roll neck (20), wherein the inner diameter of the receiving opening is formed to be greater than the outer diameter of the roll neck (20) in such a way that an annular gap (35) for receiving a lubricant (31) is arranged between the chock (60) and the roll neck (20);
a first throttle element (70) which is arranged in a rotationally fixed manner at the end face, which is at the roll barrel side, of the receiving opening of the chock for sealing the annular gap thereat; and
a second throttle element (71) which is arranged in a rotationally fixed manner at the end face, which is remote from the receiving opening of the chock, for sealing the annular gap (35) there;
**characterised in that**
the first and second throttle elements (70, 71) each form a shut-off angular region (52, α) for the lubricant (31) in the annular gap (35) and are so positioned that the shut-off angular region (52, α) extends starting from a supporting load point (A) - the angular position of the narrowest gap $h_{min}$ between the roll neck (20) and the chock (60) in the case of load - oppositely to the direction of rotation (11) of the roll (10) and over an angle (α) of the least 25° to at most 270°.

**2.** Roll assembly (100) according to claim 1,
**characterised in that**,
in the case of load the supporting load point (A) is disposed in an angular range of $\varphi = +/- 25°$ referred to the centre axis Y, which extends perpendicularly to the plane of the rolling stock, of the roll (10).

**3.** Roll assembly (100) according to claim 1 or 2,
**characterised in that**
the throttle elements are arranged to mechanically positively and sealingly bear against the roll neck (20) in the radial direction.

**4.** Roll assembly (100) according to any one of the preceding claims,
**characterised in that**
the first or second throttle element or both throttle elements (70, 71) is or are formed as an annular segment.

**5.** Roll assembly according to claim 4,
**characterised in that**
a compression spring is arranged at the outer periphery of the annular segment for sealably pressing the annular segment in a radial direction against the roll neck.

**6.** Roll assembly according to any one of the preceding claims,
**characterised in that**
the first or second throttle element or both throttle elements is or are formed as a throttle ring with the shut-off angular region (α, 52) and a throughflow angular region (β, 74) for the lubricant (31) in the annular gap (35), wherein the throughflow angular region (β, 74) is formed by throughflow openings in the throttle ring and wherein the throughflow angular region extends from adjacent the shut-off angular region over an angular range of 360° less the shut-off angular region.

**7.** Roll assembly according to claim 6,
**characterised in that**
the throttle ring is formed as a snap ring with a gap, wherein the gap is formed in the throughflow angular region.

**8.** Roll assembly according to any one of the preceding claims,
**characterised in that**
a bearing bush (40) for receiving the roll neck (20) is arranged in a rotationally fixed manner in the chock (60).

**9.** Roll assembly according to any one of the preceding claims,
**characterised in that**
the throttle element or elements (70, 71) is or are coupled to the chock (60) or to the bearing bush (40).

**10.** Roll assembly according to any one of the preceding claims,
**characterised in that**
an annular groove (16) is formed at at least one of the end faces of the bearing bush (40) or the chock (60) and
at least one of the throttle elements (70, 71) has at the rear side thereof facing the chock a flange (76) for engagement in the annular groove.

**11.** Roll assembly according to any one of the preceding claims,
**characterised in that**
an oil receiving space (64) is formed between the chock (60 and the roll barrel (25) at the end (22) of the roll neck (20 remote from the roll barrel.

**12.** Roll assembly according to claim 1 or 8,
**characterised in that**
a neck bush (30) is arranged on the roll neck (20); and the neck bush is rotatably mounted together with the roll neck in the receiving opening of the chock or in the bearing bush if present.

**13.** Roll assembly according to any one of the preceding claims,
**characterised in that**
the throttle element (70, 71) is of a multi-part construction.

**14.** Roll assembly according to any one of the preceding claims,
**characterised in that**
the annular gap (35) is formed in the region between the first and second throttle rings (70, 71) with at least one encircling annular channel (36, 36').

**15.** Roll assembly according to claim 1,
**characterised in that**
the rolls are constructed as work rolls, backing rolls and/or intermediate rolls.

**Revendications**

**1.** Dispositif à cylindre (100) pour des cylindres dans un laminoir présentant :

un cylindre (10) avec une table de cylindre (25) et au moins un tourillon de cylindre (20) ;

une empoise (60) avec un orifice destiné à accueillir le tourillon de cylindre (20), le diamètre intérieur dudit orifice étant supérieur au diamètre extérieur du tourillon de cylindre (20) de façon telle qu'entre l'empoise (60) et le tourillon (20) est prévue une fente annulaire (35) destinée à contenir un lubrifiant (31) ;
un premier élément d'étranglement (70) disposé fixe en rotation sur la face frontale côté table de cylindre de l'orifice de l'empoise, pour étanchéifier la fente annulaire ; et un second élément d'étranglement (71), disposé sur la face frontale côté opposé à la table de cylindre de l'orifice de l'empoise, pour étanchéifier la fente annulaire (35) ;
**caractérisé en ce que**
le premier et le deuxième éléments d'étranglement (70, 71) forment une plage angulaire de blocage (52, $\alpha$) pour le lubrifiant (31) dans la fente annulaire (35) et sont positionnés de telle façon que la plage angulaire de blocage (52, $\alpha$) s'étend d'un point de charge d'appui (A) - la position angulaire de la fente la plus étroite $h_{min}$ en charge entre le tourillon de cylindre (20) et l'empoise (60) - dans le sens contraire au sens de rotation (11) du cylindre (10), sur un angle ($\alpha$) d'au minimum 25° et au maximum 270°.

**2.** Dispositif à cylindre (100) selon la revendication 1, **caractérisé en ce que** le point de charge d'appui (A) en cas de charge est disposé dans une plage angulaire de $\phi$ = +/- 25°, rapportée à l'axe médian Y du cylindre (10) qui est perpendiculaire au plan du matériau à laminer.

**3.** Dispositif à cylindre selon la revendication 1 ou 2, **caractérisé en ce que**
les éléments d'étranglement sont disposés, dans la direction radiale, contre le tourillon de cylindre (20), de façon à en épouser la forme et à faire joint avec lui.

**4.** Dispositif à cylindre (100) selon l'une quelconque des revendications précédentes,
**caractérisé en ce que**
le premier ou le deuxième élément d'étranglement, ou les deux éléments d'étranglement (70, 71) a/ont la forme d'un segment annulaire.

**5.** Dispositif à cylindre selon la revendication 4, **caractérisé en ce que**,
à la périphérie extérieure du segment annulaire, un ressort de pression est disposé, qui appuie sur le segment annulaire en direction radiale, contre le tourillon de cylindre, de façon à ce qu'il fasse joint avec lui.

**6.** Dispositif à cylindre (100) selon l'une quelconque des revendications précédentes,

**caractérisé en ce que**

le premier ou le deuxième élément d'étranglement, ou les deux éléments d'étranglement a/ont la forme d'un anneau d'étranglement avec une plage angulaire de blocage ($\alpha$, 52) et une plage angulaire d'écoulement ($\beta$, 74) pour le lubrifiant (31) dans la fente annulaire (35), la plage angulaire d'écoulement ($\beta$, 74) étant constituée par des orifices d'écoulement dans l'anneau d'étranglement et la plage angulaire d'écoulement s'étendant, contre la plage angulaire de blocage, sur une plage angulaire de 360° moins la plage angulaire de blocage.

7. Dispositif à cylindre selon la revendication 6,
   **caractérisé en ce que**
   l'anneau d'étranglement est constitué en anneau élastique muni d'une fente, ladite fente étant constituée dans la plage angulaire d'écoulement.

8. Dispositif à cylindre (100) selon l'une quelconque des revendications précédentes,
   **caractérisé en ce que**
   dans l'empoise (60) est disposée fixe en rotation une douille de palier (40) destinée à accueillir le tourillon de cylindre (20).

9. Dispositif à cylindre (100) selon l'une quelconque des revendications précédentes,
   **caractérisé en ce que**
   les éléments d'étranglement (70, 71) sont couplés à l'empoise (60) ou à la douille de palier (40).

10. Dispositif à cylindre (100) selon l'une quelconque des revendications précédentes,
    **caractérisé en ce que**
    une rainure annulaire (16) est formée sur au moins une des faces avant de la douille de palier (40) ou de l'empoise (60), et **en ce que**
    au moins un des éléments d'étranglement (70, 71) présente sur sa face arrière côté empoise une bride (76) destinée à entrer en prise dans la rainure.

11. Dispositif à cylindre selon l'une quelconque des revendications précédentes,
    **caractérisé en ce que**
    un espace de logement pour l'huile (64) est formé entre l'empoise (60) et la table de cylindre (25) et à l'extrémité (22) du tourillon de cylindre (20) opposée à la table de cylindre.

12. Dispositif à cylindre selon la revendication 1 ou 8,
    **caractérisé en ce que**
    une douille de tourillon (30) est disposée sur le tourillon de cylindre (20) et **en ce que** ladite douille de tourillon avec le tourillon de cylindre est supportée en rotation dans l'orifice de l'empoise ou, le cas échéant, dans la douille de palier.

13. Dispositif à cylindre selon l'une quelconque des revendications précédentes,
    **caractérisé en ce que**
    l'élément d'étranglement (70, 71) est composé de plusieurs parties.

14. Dispositif à cylindre selon l'une quelconque des revendications précédentes,
    **caractérisé en ce que**
    la fente annulaire (35) comporte au moins un canal annulaire (36, 36') faisant un cercle complet dans la zone entre le premier et le deuxième anneaux d'étranglement (70, 71).

15. Dispositif à cylindre selon la revendication 1,
    **caractérisé en ce que**
    les cylindres sont constitués en cylindres de travail, cylindres d'appui et/ou cylindres intermédiaires.

FIG.1

100

FIG.2

FIG.3

FIG.4

EP 3 074 147 B1

52, α

70,71

φ

72

72

FIG.5

FIG.6c

FIG.6b

FIG.6a

FIG.7a

FIG.7b

EP 3 074 147 B1

FIG.8b

FIG.8a

**IN DER BESCHREIBUNG AUFGEFÜHRTE DOKUMENTE**

**In der Beschreibung aufgeführte Patentdokumente**

- US 20110299801 A1
- EP 1031389 B1
- EP 1699575 B1
- DE 19831301 A1
- DE 3117746 A1

**In der Beschreibung aufgeführte Nicht-Patentliteratur**

- OIL-FILM BEARINGS FOR ROLLING-MILLS. American Society of Lubrication Engineers, 1967